# EUROPÄISCHE PATENTSCHRIFT

(11) **EP 3 393 207 B1**
(45) Veröffentlichungstag und Bekanntmachung des Hinweises auf die Patenterteilung: **08.07.2020**
(21) Anmeldenummer: 18152213.7
(22) Anmeldetag: 18.01.2018
(51) Int. Cl.: H05B 33/08

(54) **SCHALTREGLER ZUM BETREIBEN VON LEUCHTMITTELN MIT NACHLEUCHTUNTERDRÜCKUNG**
SWITCHING REGULATOR FOR OPERATING LIGHTS WITH AFTERGLOW SUPPRESSION
RÉGULATEUR DE COMMUTATION DESTINÉ AU FONCTIONNEMENT DE MOYENS LUMINEUX À SUPPRESSION DE LUMINESCENCE RÉSIDUELLE

(30) Priorität: 20.04.2017 DE 102017206666
(43) Veröffentlichungstag der Anmeldung: 24.10.2018
(73) Patentinhaber: Tridonic GmbH & Co. KG, 6851 Dornbirn (AT)
(72) Erfinder: Lochmann, Frank, 88147 Esseratsweiler (DE); Saccavini, Lukas, 6850 Dornbirn (AT)
(74) Vertreter: Beder, Jens

(56) Entgegenhaltungen:
- WO-A1-2004/003869
- DE-A1-102010 019 228
- DE-A1-102013 211 767
- DE-A1-102014 221 502
- US-A1- 2010 301 761

## Beschreibung

Die vorliegende Erfindung betrifft einen Schaltregler zum Betreiben von Leuchtmitteln und ein Verfahren zum Steuern eines solchen Schaltreglers. Die Erfindung betrifft insbesondere Schaltregler, die in Betriebsgeräten zum Betreiben einer oder mehrerer Leuchtdioden eingesetzt werden.

Ein Betriebsgerät zum Betreiben einer oder mehrerer Leuchtdioden ist aus der WO 2013/152368 A1 bekannt. Solche Betriebsgeräte dienen hauptsächlich dazu, eine gewünschte Energieversorgung für das Leuchtmittel, wie zum Beispiel eine Leuchtdiode (LED oder OLED) oder mehrere in Serie und/oder parallel verschaltete Leuchtdioden, bereitzustellen. Zusätzliche Funktionen, wie das Dimmen der Leuchtmittel, die Veränderung/Anpassung der Lichtfarbe oder die Kompensation von Schwankungen der Eingangsspannung, können in dem Betriebsgerät vorgesehen sein.

Die Betriebsgeräte weisen oft Schaltregler, wie beispielsweise Aufwärtswandler oder Abwärtswandler, die in der Technik auch als Boost-Konverter bzw. Buck-Konverter bezeichnet werden, auf. In einem derartigen Schaltregler steuert eine Steuereinrichtung einen schnellen Schalter an, der im eingeschalteten Zustand einen Stromfluss durch eine Spule (beim Buck-Konverter auch durch die Leuchtdiode) bewirkt. Nach dem Ausschalten treibt die Spule den Strom weiter durch die Leuchtdiode und einen parallel zu der Leuchtdiode zur Spannungsstabilisierung geschalteten Kondensator.

Die in diesem Glättungskondensator/Siebkondensator enthaltene Ladung kann nach dem Ausschalten des Schaltreglers (Beendigung des Betriebs) ein Nachleuchten oder Glimmen des Leuchtmittels bzw. der Leuchtdiode bewirken, wenn sich die gespeicherte Ladung langsam über einen Stromfluss durch das Leuchtmittel abbaut.

Das Nachleuchten ist bei vielen Anwendungen unerwünscht. Zudem ist das Nachleuchten bzw. Glimmen von der Stromaufnahme des Leuchtmittels abhängig und von der Steuereinrichtung des Schaltreglers schlecht steuerbar, so dass es beim gleichzeitigen Abschalten von zum Beispiel farblich und/oder in der Leistung unterschiedlichen Leuchtmitteln zu unterschiedlichen Nachleuchteffekten kommen kann.

Ein Schaltregler zum Betreiben von Leuchtmitteln gemäß dem Oberbegriff des beigefügten Anspruches 1 ist in der DE 10 2014 221 502 A1 beschrieben.

Die DE 10 2013 211 767 A1 offenbart ein Betriebsgerät für Leuchtmittel mit einem Abwärtswandler und einem Schalter, der das an dem Abwärtswandler angeschlossene Leuchtmittel überbrückt, wenn das Leuchtmittel ausgeschaltet werden soll.

Ein Betriebsgerät, bei dem ein Synchronwandler die Betriebsspannung für das Leuchtmittel erzeugt, ist in der DE 10 2010 019 228 A1 beschrieben.

Der Erfindung liegt die Aufgabe zugrunde, Vorrichtungen und Verfahren anzugeben, die die beschriebenen Probleme verringern. Aufgabe ist es insbesondere, einen Schaltregler, ein Betriebsgerät und ein Verfahren zum Steuern eines Schaltreglers für den Betrieb von einem oder mehreren Leuchtmitteln bereitzustellen, mit denen der Effekt des Nachleuchtens mit einem einfachen und kostengünstigen Aufbau verringert werden kann.

Diese Aufgabe wird gemäß den Merkmalen der unabhängigen Ansprüche gelöst. Die Erfindung wird durch die Merkmale der abhängigen Ansprüche weitergebildet.

Gemäß der vorliegenden Erfindung weist ein Schaltregler zum Betreiben von zumindest einem Leuchtmittel eine Steuerschaltung, die dazu ausgelegt ist, einen mit einer Spule gekoppelten ersten Schalter des Schaltreglers anzusteuern, einen mit der Spule gekoppelten Kondensator, an dem das Leuchtmittel angeschlossen oder ankoppelbar ist, und einen zum Entladen des Kondensators mit dem Kondensator gekoppelten zweiten Schalter auf. Die Steuerschaltung ist dazu ausgelegt, mittels Ansteuerung des zweiten Schalters den Kondensator bei einer Beendigung des Betriebs der Leuchtdiode zumindest teilweise zu entladen. Der Schaltregler ist ein Synchronwandler, wobei der zweite Schalter der die Diode des Abwärtswandlers bzw. des Aufwärtswandlers ersetzende Schalter des Synchronwandlers ist. Auf diese Weise muss kein zusätzlicher Schalter zum Entladen des Kondensators vorgesehen werden.

Die Entladung kann in einfacher Weise über einen parallel zum Kondensator mittels des zweiten Schalters geschalteten Widerstand erfolgen. Der Stromfluss durch das Leuchtmittel kann nach dem Ausschalten durch das Zu- und Abschalten des Widerstands gesteuert werden, um den Effekt des Nachleuchtens zu verringern oder gezielt zu beeinflussen.

Die Steuerschaltung kann dazu ausgelegt sein, den zweiten Schalter in Abhängigkeit vom Dimm-Pegel des Leuchtmittels zum Zeitpunkt vor dem Ausschalten zu steuern, wobei Ein- und/oder Ausschaltzeitpunkt sowie Schaltfrequenz des zweiten Schalters variiert werden. Es ist auch möglich, dass, insbesondere bei sehr niedrigen Dimm-Pegeln, keine Entladung oder nur eine Teilentladung des Kondensators über den zweiten Schalter von der Steuerschaltung veranlasst wird.

Um das angeschlossene Leuchtmittel vom Massepotential des Schaltreglers nach dem Ausschalten (Beendigung des Betriebs) zu trennen, kann ein dritter Schalter zwischen dem Masseanschluss des Schaltreglers und dem Kondensator angeordnet sein, wobei die Steuerschaltung dazu ausgelegt ist, mittels Ansteuerung des dritten Schalters das an dem masseseitigen Anschluss des Kondensators angekoppelte Leuchtmittel bei einer Beendigung des Betriebs des Leuchtmittels von dem Masseanschluss (Massepotential) zu trennen.

Alternativ kann der dritte Schalter zwischen dem masseseitigen Anschluss des Kondensators und dem Leuchtmittel oder einem Ausgangsanschluss, an dem das Leuchtmittel anschließbar ist, angeordnet sein, um das Leuchtmittel bei einer Beendigung des Betriebs des Leuchtmittels von dem Masseanschluss zu trennen. Diese Anordnung bzw. Potentialtrennung am Ausgang des Schaltreglers hat den Vorteil, dass Potentialverschiebungen, die für die Steuerschaltung problematisch sein können und eine entsprechende Anpassung der Steuerschaltung erforderlich machen, nicht oder nur vermindert auftreten und ein Leuchten der LED bei ausgeschalteter LED wird vermieden.

Alternativ kann der erste Schalter zwischen dem masseseitigen Anschluss des Kondensators und dem Leuchtmittel oder einem Ausgangsanschluss, an dem das Leuchtmittel anschließbar ist, angeordnet sein, um das Leuchtmittel bei einer Beendigung des Betriebs von dem Masseanschluss zu trennen. Somit ist kein zusätzlicher (dritter) Schalter für die Potentialtrennung nötig.

Alternativ oder zusätzlich kann der Schaltregler kann eine erste Ausgangs-Konverterstufe zum Betreiben eines ersten Leuchtmittels und eine zweite Ausgangs-Konverterstufe zum Betreiben eines zweiten Leuchtmittels enthalten, wobei jede Konverterstufe die Spule, den Kondensator, den ersten Schalter und den zweiten Schalter aufweist.

Zusätzlich kann die Steuerschaltung dazu ausgelegt sein, den zweiten Schalter der Ausgangs-Konverterstufe und den zweiten Schalter der zweiten Ausgangs-Konverterstufe unterschiedlich anzusteuern. Die unterschiedliche Steuerung der Entladungen kann, wie oben beschrieben, von den vorangegangenen Dimm-Pegeln der an Ausgangs-Konverterstufen angeschlossenen Leuchtmittel abhängen, von den jeweiligen angeschlossenen Leuchtmitteltypen (Farbe, Leistung) und/oder von Messgrößen, die von der Steuerschaltung für die Steuerung- oder Regelung des Schaltreglers erfasst werden. Es ist auch möglich, dass Befehle für die Steuerung der ggf. unterschiedlichen

Entladungen vom Anwender oder Hersteller in die Steuerschaltung eingegeben werden.

Gemäß der vorliegenden Erfindung weist ein Betriebsgerät für Leuchtdioden einen der oben beschriebenen Schaltregler auf.

Gemäß der vorliegenden Erfindung weist ein Verfahren zum Steuern eines Schaltreglers für den Betrieb von zumindest einem Leuchtmittel die Schritte:
- Ansteuern eines mit einer Spule gekoppelten Schalters des Schaltreglers, um einen mit der Spule gekoppelten Kondensator zu laden und das an dem Kondensator angeschlossene Leuchtmittel zu betreiben, und
- Ansteuern eines mit dem Kondensator gekoppelten zweiten Schalters, um den Kondensator bei einer Beendigung des Betriebs des Leuchtmittels zu entladen und/oder diesen entladen zu halten, auf.

Der Schaltregler ist ein Synchronwandler und der zweite Schalter der die Diode des Abwärtswandlers oder des Aufwärtswandlers ersetzende Schalter des Synchronwandlers, wobei zum Laden des Kondensators und Betreiben des an dem Kondensator angeschlossenen Leuchtmittels beim Betrieb des Leuchtmittels der erste Schalter und der zweite Schalter abwechselnd ein- und ausgeschaltet werden und zum Entladen bei der Beendigung des Betriebs des Leuchtmittels der erste Schalter ausgeschaltet und der zweite Schalter zumindest für eine bestimmte Zeit eingeschaltet wird oder bleibt.

Alternativ oder zusätzlich kann ein dritter Schalter zwischen dem Masseanschluss des Schaltreglers und dem Kondensator angeordnet sein, und das Verfahren den Schritt des Ansteuerns des dritten Schalters bei der Beendigung des Betriebs des Leuchtmittels, um das an dem masseseitigen Anschluss des Kondensators angekoppelte Leuchtmittel von dem Masseanschluss zu trennen, aufweisen.

Alternativ kann der dritte Schalter zwischen dem masseseitigen Anschluss des Kondensators und dem Leuchtmittel angeordnet sein, um das Leuchtmittel von dem Masseanschluss zu trennen.

Alternativ kann der erste Schalter zwischen dem masseseitigen Anschluss des Kondensators und dem Leuchtmittel angeordnet sein, um das Leuchtmittel von dem Masseanschluss zu trennen.

Der Schaltregler kann eine erste Ausgangs-Konverterstufe zum Betreiben eines ersten Leuchtmittels und eine zweite Ausgangs-Konverterstufe zum Betreiben eines zweiten Leuchtmittels enthalten, wobei jede Konverterstufe die Spule, den Kondensator, den ersten Schalter und den zweiten Schalter aufweist und bei der Beendigung des Betriebs beider Leuchtmittel der zweite Schalter der ersten Ausgangs-Konverterstufe und der zweite Schalter der zweiten Ausgangs-Konverterstufe unterschiedlich angesteuert werden.

Nachfolgend wird die Erfindung anhand der beiliegenden Zeichnungen näher erläutert. Es zeigen:
Fig. 1 eine Schaltung eines Schaltreglers nach einem ersten Ausführungsbeispiel gemäß der vorliegenden Erfindung,
Fig. 2 eine Schaltung eines Schaltreglers nach einem zweiten Ausführungsbeispiel gemäß der vorliegenden Erfindung,
Fig. 3 eine Schaltung eines Schaltreglers nach einem dritten Ausführungsbeispiel gemäß der vorliegenden Erfindung,
Fig. 4 eine Schaltung eines Betriebsgeräts mit mehreren Schaltreglern nach einem vierten Ausführungsbeispiel gemäß der vorliegenden Erfindung, und
Fig. 5 ein vereinfachtes Diagramm zur Darstellung des Verfahrens.

Komponenten mit gleichen Funktionen sind in den Figuren mit gleichen Bezugszeichen gekennzeichnet.

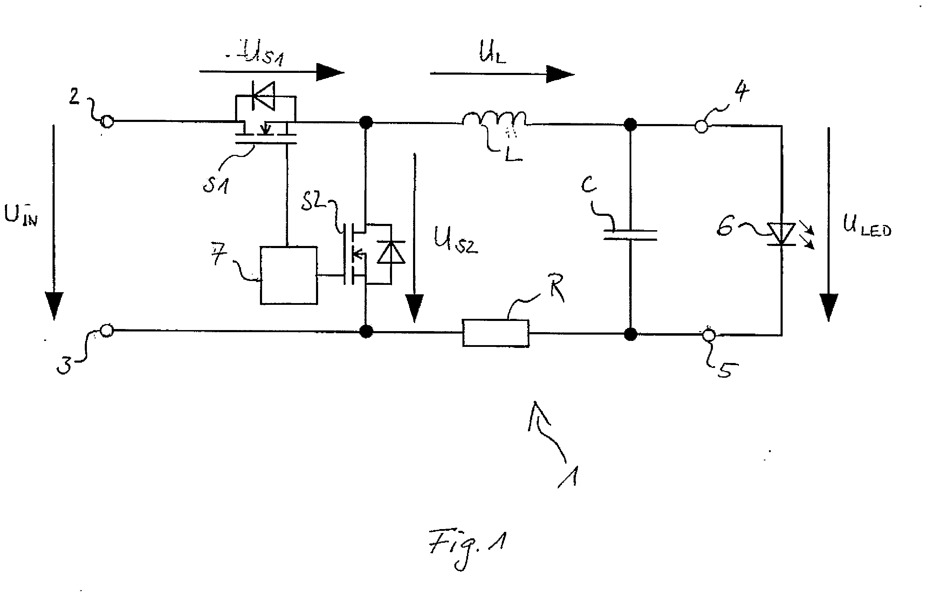

Der in Fig. 1 gezeigte Schaltregler 1 dient zum Betrieb von Leuchtmitteln und kann in ein Betriebsgerät (nicht gezeigt), welches weitere dem Schaltregler 1 vorgelagerte Komponenten, wie einen Gleichrichter und/oder eine Leistungsfaktorkorrekturschaltung aufweist, gemäß der vorliegenden Erfindung integriert werden.

An den zwei Eingangsanschlüssen 2, 3 des abgebildeten Schaltreglers 1 wird eine Versorgungsspannung Uᵢₙ zugeführt, die eine Gleichspannung oder eine gleichgerichtete Wechselspannung sein kann, wobei dem Eingangsanschluss 3 das Potential null (Masse), welches das Bezugspotential für alle Signal- und Betriebsspannungen darstellt, zugeordnet ist.

An den Ausgangsanschlüssen 4, 5 des Schaltreglers 1 ist das Leuchtmittel 6 angeschlossen, wobei der Ausgangsanschluss 4 mit dem Eingangsanschluss 2 über eine Reihenschaltung aus einem ersten Schalter S1 und einer Spule/Induktivität L und der Ausgangsanschluss 5 mit dem Eingangsanschluss 3 über einen Widerstand R verbunden sind. Ein Kondensator C ist parallel zu den Ausgangsanschlüssen 4, 5 verschaltet und ein zweiter Schalter S2 ist zwischen dem Eingangsanschluss 3 und einem zwischen dem ersten Schalter S1 und der Spule L liegenden Schaltungspunkt angeordnet.

Das Leuchtmittel 6 ist vorzugsweise eine Leuchtdiode (LED) oder mehrere LEDs. Die LEDs können anorganische oder organische LEDs sein. Die mehreren LEDs können in Serie oder parallel geschaltet sein. Die mehreren LEDs können auch in komplexeren Anordnungen verschaltet sein, beispielsweise in mehreren zueinander parallel geschalteten Reihenschaltungen.

Der in Fig. 1 gezeigte Schaltregler 1 ist ein Synchronwandler (englisch "synchronous buck converter"), der einem Abwärtswandler oder Aufwärtswandler entspricht, bei dem die Diode durch den zweiten Schalter S2 ersetzt ist. Eine Steuerschaltung 7 des Schaltreglers 1 steuert die Schalter S1 und S2 im Betrieb, so dass die zwei Schalter S1, S2 stets abwechselnd schließen. Ist der Schalter S1 geschlossen und der Schalter S2 geöffnet, fließt ein Strom von dem Eingangsanschluss 2 über den Schalter S1, die Spule L, die Parallelschaltung aus dem Kondensator C und dem Leuchtmittel 6 und dem Widerstand R zum Eingangsanschluss 3, so dass das Leuchtmittel 6 leuchtet und Energie in der Spule L und dem Kondensator C während des Ansteigens des Stroms bzw. der Spannung gespeichert wird.

Nach dem Ausschalten des Schalters S1 und dem Einschalten des Schalters S2 treibt die Spule L den durch sie fließenden Strom weiter durch das Leuchtmittel 6, den Kondensator C und den Schalter S2. Die im Magnetfeld der Spule 5 gespeicherte Energie entlädt sich. Das Ein- und Ausschalten der Schalter S1 und S2 kann in Abhängigkeit vom Stromfluss durch die Spule L oder das Leuchtmittel 6 erfolgen, wobei der Stromfluss von den Steuerschaltung 7, beispielsweise mittels einem Messwiderstand (z.B. Widerstand R) oder einer an die Spule L gekoppelte Hilfsspule ermittelt und auch für eine Steuerung oder Regelung der Abgabeleistung genutzt werden kann.

Es ist auch möglich, dass die Steuerschaltung 7 die Abgabeleistung bzw. den mittleren Stromfluss entsprechend einem Signal, das einen Dimm-Pegel für das Leuchtmittel 6 anzeigt, steuert oder regelt. Die Steuerschaltung 7 kann eine integrierte Halbleiterschaltung sein oder eine integrierte Halbleiterschaltung umfassen. Die Steuerschaltung 7 kann als ein Prozessor, ein Mikroprozessor, ein Controller, ein Mikrocontroller oder eine anwendungsspezifische Spezialschaltung (ASIC, "Application Specific Integrated Circuit") oder als eine Kombination der genannten Einheiten ausgestaltet sein.

Gemäß der vorliegenden Erfindung wird bei einem Ausschalten (Beendigung des Betriebs) des Leuchtmittels 6 die in dem Kondensator C während des Betriebs gespeicherte Ladung zumindest teilweise über einen schaltbaren Bypass abgeführt, um ein Nachleuchten des Leuchtmittels 6 durch ein Entladen des Kondensators C über das Leuchtmittel 6 zu unterdrücken. Der Bypass wird in diesem Beispiel vorteilhaft mit dem bereits vorhandenen Schalter S2 gebildet. Hierfür schaltet die Steuerschaltung 7 bei der Beendigung des Betriebs den Schalter S2 ein bzw. lässt ihn eingeschaltet, so dass ein Stromfluss in umgekehrter Richtung durch die Spule L, den Schalter S2 und den Widerstand R erfolgen kann. Der Kondensator C entlädt sich dann (auch) über den Bypass, was den Effekt des Nachleuchtens des Leuchtmittels 6 verringert.

Durch die Wahl des Ein- und/oder Ausschaltzeitpunktes sowie der Schaltfrequenz des Schalters S2 kann der Effekt des Nachleuchtens gezielt beeinflusst werden. Dies kann von Vorteil sein, wenn der Schaltregler 1 mehrere parallel an den Eingangsanschlüssen 2, 3 angeschlossene Konverterstufen zum Betreiben verschiedener Leuchtmittel 6 aufweist, wobei jede aus der Spule L, dem Kondensator C, dem Widerstand R, den Schaltern S1 und S2 bestehende Konverterstufe ein anderes Leuchtmittel 6 speist. Die Konverterstufen können jeweils eine eigene Steuerschaltung 7, die ggf. mit den anderen Steuerschaltungen 7 vernetzt ist, oder von einer zentralen Steuerschaltung 7 jeweils individuell gesteuert werden.

Weisen die Leuchtmittel 6 verschiedene Nachleuchtzeiten auf oder treten unergewünschte Farbmischeffekte des von den Leuchtmitteln 7 abgegebenen Lichts auf, kann die zentrale Steuerschaltung 7 dem durch eine entsprechende individuelle Steuerung des Entladevorgangs in der jeweiligen Konverterstufe entgegenwirken. Hierfür kann die Steuerschaltung 7 individuelle Messwerte erfassen und/oder auf vom Anwender oder Hersteller in der Steuerschaltung 7 gespeicherte Vorgaben/Werte zurückgreifen.

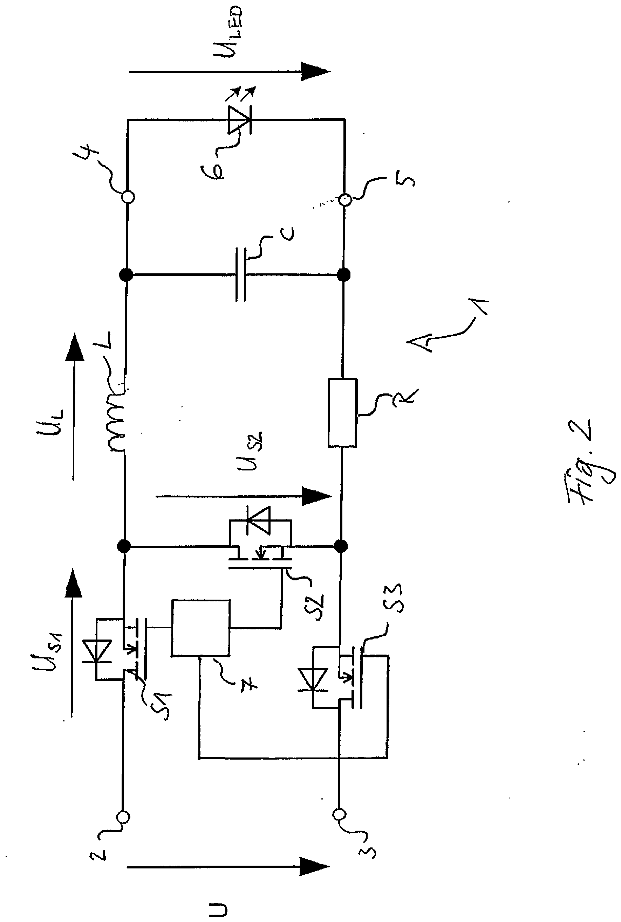

Fig. 2 zeigt eine vereinfachte Schaltung eines Schaltreglers 1 nach einem zweiten Ausführungsbeispiel gemäß der vorliegenden Erfindung, bei dem zusätzlich für eine Potentialtrennung des Leuchtmittels 6 ein dritter Schalter S3 zwischen dem Eingangsanschluss 3 und dem Widerstand R eingefügt ist.

Die Steuerschaltung 7 steuert den Schalter S3, so dass dieser während des Betriebs geschlossen ist und bei der Beendigung des Betriebs zumindest für die Zeitdauer des Entladens geöffnet wird, um die Potentialtrennung herzustellen.

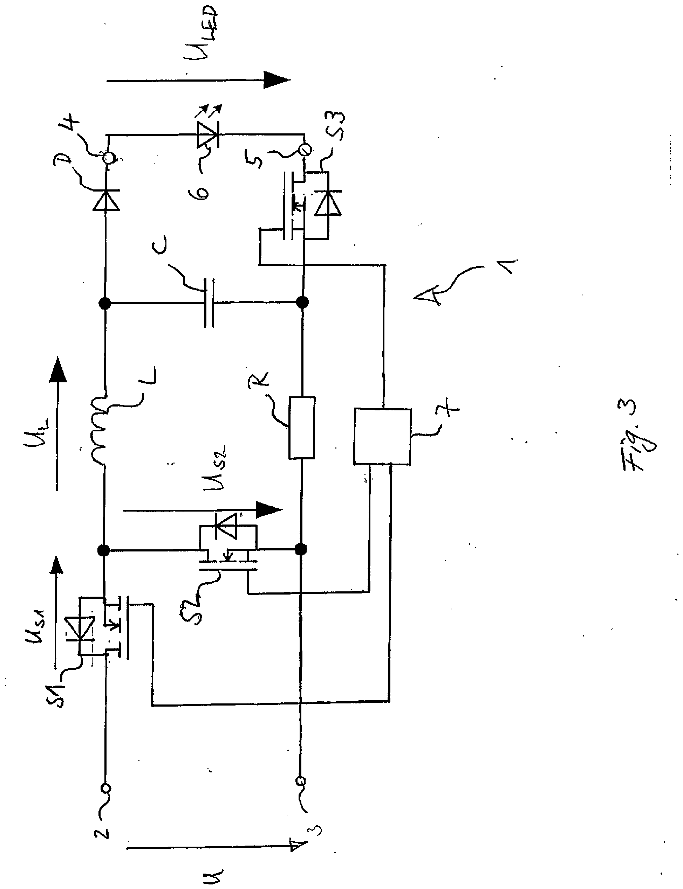

Bei dem in Fig. 3 gezeigten Schaltregler 1 ist der Schalter S3 nicht zwischen dem Eingangsanschluss 3 und dem Widerstand R eingefügt, sondern zwischen dem Kondensator C und dem Ausgangsanschluss 5, wobei eine zusätzliche Diode D zwischen dem Kondensator C und dem Ausgangsanschluss 4 angeordnet ist. Die Positionierung des Schalters S3 an dieser Stelle hat den Vorteil, dass Potentialverschiebungen, die für die Steuerschaltung 7 problematisch sein können und eine entsprechende Anpassung der Steuerschaltung erforderlich machen, nicht oder nur vermindert auftreten.

Die Ansteuerung der Schalter S2 und S3 während des Betriebs erfolgt wie oben beschrieben, wobei der Schalter S3 während des Betriebs geschlossen ist und bei der Beendigung des Betriebs von der Steuerschaltung 7 geöffnet wird. Eine Entladung des Kondensators C kann über den dann geschlossen Schalter S2 erfolgen. Die Schalter S2 und S3 können bei Betriebsende synchron (zeitgleich) ein- bzw. ausgeschaltet und/oder bei Betriebsaufnahme synchron aus- bzw. eingeschaltet werden. Es ist auch möglich die Schalter S2 und S3 bei Betriebsende und/oder Betriebsaufnahme zu verschiedenen Zeiten zu schalten. Der Schalter S2 kann beispielsweise nach der zumindest teilweisen Entladung des Kondensators C wieder geöffnet werden und der Schalter S3 für eine Potentialtrennung erst nach dem Öffnen des Schalters S2 geöffnet werden.

Besonders vorteilhaft ist es, wenn der Schalter S3 während des Betriebs die Funktion des Schalters S1 mitübernimmt und somit der Schalter S1 eingespart werden kann. Hierzu werden, wie oben beschrieben, die Schalter S2 und S3 im Betrieb so gesteuert, dass die zwei Schalter S2, S3 stets abwechselnd schließen und bei der Beendigung des Betriebs der Schalter S2 für die Entladung geschlossen und der Schalter S3 für die Potentialtrennung geöffnet wird.

Die in Fig. 1, Fig. 2 und Fig. 3 gezeigten Schaltregler 1 weisen nur eine aus der Spule L, dem Kondensator C, dem Widerstand R, den Schaltern S1, S2 und ggf. S3 bestehende Konverterstufe auf. Die Schaltregler 1 können jedoch auch mehrere parallel an den Eingangsanschlüssen 2, 3 angeschlossene Konverterstufen zum Betreiben verschiedener Leuchtmittel 6 aufweisen und, wie oben beschrieben, gesteuert werden. Der Schaltregler 1 kann auch derart ausgeführt sein, dass entweder der erste Schalter S1 oder der zweite Schalter S2 durch eine Diode ersetzt wird. In diesem Fall würden nur der zweite Schalter S2 und der dritte Schalter S3 aktiv angesteuert werden, während der erste Schalter S1 durch eine Diode ersetzt ist, oder alternativ, wenn der zweite Schalter S2 durch eine Diode ersetzt ist, nur der erste Schalter S1 und der dritte Schalter S3 aktiv angesteuert werden. In diesem Fall wäre der Schaltregler 1 nicht als Synchronwandler ausgebildet. Auf diese Weise würde beispielsweise ein Verfahren zum Steuern eines Schaltreglers für den Betrieb von zumindest einem Leuchtmittel 6 ermöglicht, mit den Schritten Ansteuern eines mit einer Spule L gekoppelten ersten Schalters S1 des Schaltreglers 1, um einen mit der Spule gekoppelten Kondensator C zu laden und das an dem Kondensator C angeschlossene Leuchtmittel 6 zu betreiben, wobei ein dritter Schalter S3 zwischen dem Masseanschluss 3 des Schaltreglers 1 und dem Kondensator C angeordnet ist, und das Verfahren den Schritt Ansteuern des dritten Schalters S3 bei der Beendigung des Betriebs des Leuchtmittels 6, um das an dem masseseitigen Anschluss des Kondensators C angekoppelte Leuchtmittel 6 von dem Masseanschluss 3 zu trennen, aufweist.

Alternativ kann der Schaltregler auch eine andere Topologie aufweisen, beispielsweise eine Halbbrückentopologie, wobei vorzugsweise der erste Schalter S1 und der zweite Schalter S2 alternierend getaktet werden. In diesem Fall kann der Ausgangskreis mit der Spule L und dem Kondensator C auch als resonanter Ausgangskreis ausgeführt sein. Der Ausgangskreis kann optional auch weitere Elemente enthalten, so kann anstelle der Spule L auch ein Transformator vorhanden sein.

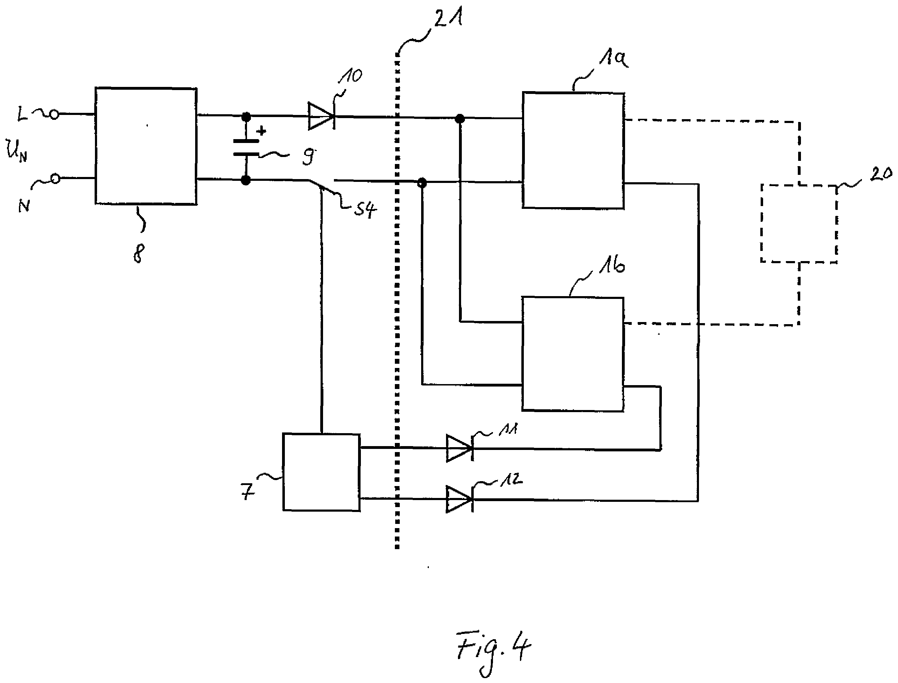

Fig. 4 zeigt ein Betriebsgerät nach einem Ausführungsbeispiel gemäß der vorliegenden Erfindung, bei dem mehrere von der Steuerschaltung 7 steuerbare Schaltregler 1a, 1b an einer zentralen Leistungsfaktorkorrekturschaltung 8 parallel angeschlossen sein können. Die Schaltregler 1a, 1b können einen in Fig. 1, Fig. 2 oder Fig. 3 gezeigten Aufbau aufweisen und jeweils ein oder mehrere Leuchtmittel 6 (nicht gezeigt) betreiben.

Die in Fig. 4 gezeigte Leistungsfaktorkorrekturschaltung 8 kann einen Gleichrichter enthalten, der die an den Eingangsanschlüssen L und N des Betriebsgeräts anliegende Netzspannung U_{N} gleichrichtet. Der zur Verdeutlichung separat am Ausgang der Leistungsfaktorkorrekturschaltung 8 parallel angekoppelte Kondensator 9 kann auch Bestandteil der Leistungsfaktorkorrekturschaltung 8 sein. Eine Diode 10 und einen Schalter S4 können zur Entkopplung zwischen der Leistungsfaktorkorrekturschaltung 8 und den Schaltreglern 1a, 1b angeordnet sein, wobei der Schalter S4 von der Steuerschaltung 7 bei einem Empfang eines Signals für das Einschalten der an den Schaltreglern 1a, 1b angeschlossenen, ggf. eine unterschiedliche Farbtemperatur aufweisenden Leuchtmittel 6 (nicht gezeigt) geschlossen und beim Ausschalten geöffnet wird.

Die Steuerschaltung 7 ist mit jedem Schaltregler 1a, 1b über zumindest eine eine Diode 11, 12 aufweisende Steuerleitung verbunden und steuert zumindest einen der Schaltregler 1a, 1b, wie in den Ausführungsformen der Figuren 1 bis 3 beschrieben, wobei jeder der Schalter S1 und S2 bzw. S1 bis S3 von der Steuerschaltung 7 steuerbar ist. Weist einer der Schaltregler 1a, 1b den in Fig. 2 gezeigten Aufbau auf, kann der zur Potentialtrennung dienende Schalter S3 durch den Schalter S4 ersetzt werden.

Alternativ kann eine zweite Steuerschaltung 20 vorgesehen sein, welche die Schalter S1 und S2 oder S1 bis S3 wie beschrieben steuert, wobei dagegen die Steuerschaltung 7 nur den Schalter S4 oder nur die Schalter S3 und S4 in bekannter Weise steuert.

Zusätzlich können die Leistungsfaktorkorrekturschaltung 8, der Schalter S4, die Steuerschaltung 7 und die Diode 10 von den Schaltreglern 1a, 1b und der zweiten Steuerschaltung 20 durch eine Isolationsbarriere 21, z.B. galvanisch, getrennt werden.

Zumindest einer der Schalter S1, S2, S3 und S4 kann ein Leistungsschalter, ein Feldeffekttransistor, ein Bipolartransistor oder ein Transistor mit isolierter Gateelektrode sein. In den Beispielen sind die Schalter S1, S2, S3 und S4 als separate Bauteile ausgeführt. Es ist jedoch auch möglich, dass zumindest einer der Schalter S1, S2, S3 und S4 bzw. dessen Schaltfunktion von der als Mikrocontroller ausgebildeten Steuerschaltung 7 (oder 20) selbst ausgeführt wird.

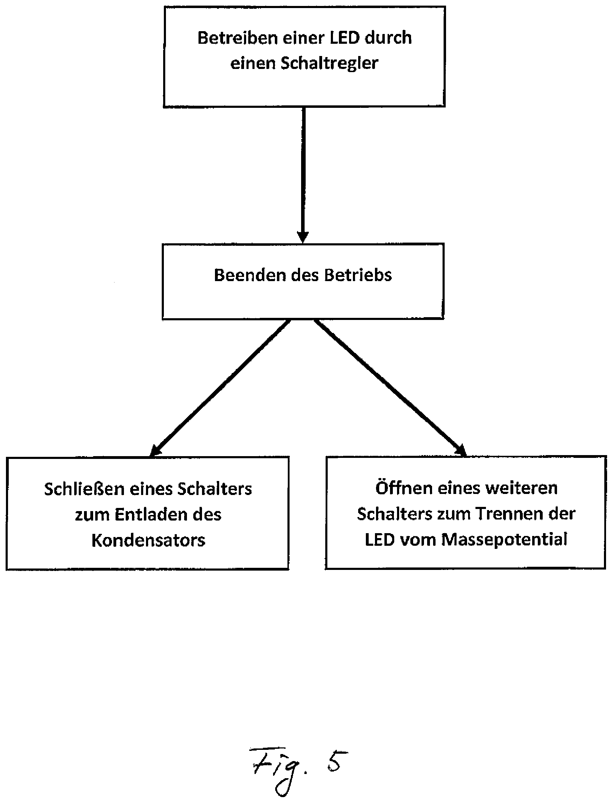

In Fig. 5 ist ein stark vereinfachtes Ablaufdiagramm dargestellt, das die einzelnen Schritte bei der Durchführung des oben ausführlich beschriebenen Verfahrens beim Abschalten der LED zeigt.

## Patentansprüche

1. Schaltregler zum Betreiben von zumindest einem Leuchtmittel (6), aufweisend
eine Steuerschaltung (7), die dazu ausgelegt ist, einen mit einer Spule (L) gekoppelten ersten Schalter (S1) des Schaltreglers (1) anzusteuern,
einen mit der Spule (L) gekoppelten Kondensator (C), an dem das Leuchtmittel (6) angeschlossen oder ankoppelbar ist, und
einen zum Entladen des Kondensators (C) mit dem Kondensator (C) gekoppelten zweiten Schalter (S2), wobei
die Steuerschaltung (7) dazu ausgelegt ist, mittels Ansteuerung des zweiten Schalters (S2) den Kondensator (C) bei einer Beendigung des Betriebs des Leuchtmittels (6) zumindest teilweise zu entladen,
**dadurch gekennzeichnet,**
**dass** der Schaltregler (1) ein Synchronwandler ist, wobei der zweite Schalter (S2) der die Diode eines entsprechenden Abwärts- oder Aufwärtswandlers ersetzende Schalter des Synchronwandlers ist.

2. Schaltregler nach Anspruch 1, wobei
ein dritter Schalter (S3) zwischen einem Masseanschluss (3) des Schaltreglers (1) und dem Kondensator (C) angeordnet ist, und
die Steuerschaltung (7) dazu ausgelegt ist, mittels Ansteuerung des dritten Schalters (S3) das an dem masseseitigen Anschluss des Kondensators (C) angekoppelte Leuchtmittel (6) bei einer Beendigung des Betriebs des Leuchtmittels (6) von dem Masseanschluss (3) zu trennen.

3. Schaltregler nach Anspruch 1, wobei
ein dritter Schalter (S3) zwischen einem masseseitigen Anschluss des Kondensators (C) und dem Leuchtmittel (6) oder einem Ausgangsanschluss (5), an dem das Leuchtmittel (6) anschließbar ist, angeordnet ist, und
die Steuerschaltung (7) dazu ausgelegt ist, mittels Ansteuerung des dritten Schalters (S3) das Leuchtmittel (6) bei einer Beendigung des Betriebs des Leuchtmittels (6) von dem Masseanschluss zu trennen.

4. Schaltregler nach Anspruch 1, wobei
der erste Schalter (S1) zwischen einem masseseitigen Anschluss des Kondensators (C) und dem Leuchtmittel (6) oder einem Ausgangsanschluss (5), an dem das Leuchtmittel (6) anschließbar ist, angeordnet ist, und
die Steuerschaltung (7) dazu ausgelegt ist, mittels Ansteuerung des ersten Schalters (S1) das Leuchtmittel (6) bei einer Beendigung des Betriebs des Leuchtmittels (6) von dem Masseanschluss zu trennen.

5. Schaltregler nach einem der Ansprüche 1 bis 4, wobei
der Schaltregler (1) eine erste Ausgangs-Konverterstufe zum Betreiben eines ersten Leuchtmittels (6) und eine zweite Ausgangs-Konverterstufe zum Betreiben eines zweiten Leuchtmittels (6) aufweist, wobei jede Ausgangs-Konverterstufe die Spule (L), den Kondensator (C), den ersten Schalter (S1) und den zweiten Schalter (S2) aufweist.

6. Schaltregler nach Anspruch 5, wobei
die Steuerschaltung (7) dazu ausgelegt ist, den zweiten Schalter (S2) der ersten Ausgangs-Konverterstufe und den zweiten Schalter (S2) der zweiten Ausgangs-Konverterstufe unterschiedlich anzusteuern.

7. Betriebsgerät für Leuchtdioden, aufweisend einen Schaltregler (1) nach einem der Ansprüche 1 bis 6.

8. Verfahren zum Steuern eines Schaltreglers für den Betrieb von zumindest einem Leuchtmittel (6), mit den Schritten:
Ansteuern eines mit einer Spule (L) gekoppelten ersten Schalters (S1) des Schaltreglers (1), um einen mit der Spule gekoppelten Kondensator (C) zu laden und das an dem Kondensator (C) angeschlossene Leuchtmittel (6) zu betreiben, und
Ansteuern eines mit dem Kondensator (C) gekoppelten zweiten Schalters (S2), um den Kondensator (C) bei einer Beendigung des Betriebs des Leuchtmittels (6) zu entladen,
**dadurch gekennzeichnet,**
**dass** der Schaltregler (1) ein Synchronwandler ist, wobei der zweite Schalter der die Diode eines entsprechenden Abwärts- oder Aufwärtswandlers ersetzende Schalter des Synchronwandlers ist, wobei
zum Laden des Kondensators (C) und Betreiben des an dem Kondensator (C) angeschlossenen Leuchtmittels (6) beim Betrieb des Leuchtmittels (6) der erste Schalter (S1) und der zweite Schalter (S2) abwechselnd ein- und ausgeschaltet werden und
zum Entladen bei der Beendigung des Betriebs des Leuchtmittels (6) der erste Schalter (S1) ausgeschaltet und der zweite Schalter (S2) zumindest für eine bestimmte Zeit eingeschaltet wird oder bleibt.

9. Verfahren nach Anspruch 8, wobei
ein dritter Schalter (S3) zwischen einem Masseanschluss (3) des Schaltreglers (1) und dem Kondensator (C) angeordnet ist, und das Verfahren den Schritt
Ansteuern des dritten Schalters (S3) bei der Beendigung des Betriebs des Leuchtmittels (6), um das an dem masseseitigen Anschluss des Kondensators (C) angekoppelte Leuchtmittel (6) von dem Masseanschluss (3) zu trennen, aufweist.

10. Verfahren nach Anspruch 8, wobei
ein dritter Schalter (S3) zwischen einem masseseitigen Anschluss des Kondensators (C) und dem Leuchtmittel (6) angeordnet ist, und das Verfahren den Schritt:
Ansteuern des dritten Schalters (S3) bei der Beendigung des Betriebs des Leuchtmittels (6), um das Leuchtmittel (6) von dem Masseanschluss (3) zu trennen, aufweist.

11. Verfahren nach Anspruch 8, wobei der erste Schalter (S1) zwischen einem masseseitigen Anschluss des Kondensators (C) und dem Leuchtmittel (6) angeordnet ist, und das Verfahren den Schritt:
Ansteuern des ersten Schalters (S1) bei der Beendigung des Betriebs des Leuchtmittels, um das Leuchtmittel von dem Masseanschluss zu trennen, aufweist.

12. Verfahren nach einem der Ansprüche 8 bis 11, wobei
der Schaltregler (1) eine erste Ausgangs-Konverterstufe zum Betreiben eines ersten Leuchtmittels (6) und eine zweite Ausgangs-Konverterstufe zum Betreiben eines zweiten Leuchtmittels (6) aufweist, wobei jede Ausgangs-Konverterstufe die Spule (L), den Kondensator (C), den ersten Schalter (S1) und den zweiten Schalter (S2) aufweist, und
bei der Beendigung des Betriebs beider Leuchtmittel (6) der zweite Schalter (S2) der ersten Ausgangs-Konverterstufe und der zweite Schalter (S2) der zweiten Ausgangs-Konverterstufe unterschiedlich angesteuert werden.

## Claims

1. A switching regulator for operating at least one lighting means (6), having
a control circuit (7), which is designed to control a first switch (S1) of the switching regulator (1) coupled to a coil (L),
a capacitor (C) coupled to the coil (L), to which the light means (6) is connected or can be coupled, and
a second switch (S2) coupled to the capacitor (C) for discharging said capacitor (C), wherein
the control circuit (7) is designed to at least partially discharge the capacitor (C) when the operation of the lighting means (6) is ended by means of controlling the second switch (S2),
**characterized in**
**that** the switching regulator (1) is a synchronous converter, wherein the second switch (S2) is the switch of the synchronous converter, which replaces the diode of a corresponding step-down or step-up converter.

2. The switching regulator according to Claim 1, wherein
a third switch (S3) is arranged between a ground connection (3) of the switching regulator (1) and the capacitor (C), and
the control circuit (7) is designed to separate the lighting means (6) coupled to the ground-side connection of the capacitor (C) from the ground connection (3) when the operation of the lighting means (6) is ended by means of controlling the third switch (S3).

3. The switching regulator according to Claim 1, wherein
a third switch (S3) is arranged between a ground-side connection of the capacitor (C) and the lighting means (6) or an output connection (5), to which the lighting means (6) can be coupled, and
the control circuit (7) is designed to separate the lighting means (6) from the ground connection when the operation of the lighting means (6) is ended by means of controlling the third switch (S3).

4. The switching regulator according to Claim 1, wherein
the first switch (S1) is arranged between a ground-side connection of the capacitor (C) and the lighting means (6) or an output connection (5), to which the lighting means (6) is connected, and
the control circuit (7) is designed to separate the lighting means (6) from the ground connection when the operation of the lighting means (6) is ended by means of controlling the first switch (S1).

5. The switching regulator according to any one of Claims 1 to 4, wherein
the switching regulator (1) has a first output converter stage for operating a first lighting means (6) and a second output converter stage for operating a second lighting means (6), wherein each output converter stage has a coil (L), the capacitor (C), the first switch (S1) and the second switch (S2).

6. The switching regulator according to Claim 5, wherein
the control circuit (7) is designed to control the second switch (S2) of the first output converter stage and the second switch (S2) of the second output converter stage differently.

7. An operating device for light-emitting diodes, having a switching regulator (1) according to any one of Claims 1 to 6.

8. A method for controlling a switching regulator for the operation of at least one lighting means (6), having the steps:
Control of a first switch (S1) of the switching regulator (1) coupled to a coil (L), in order to charge a capacitor (C) coupled to the coil and to operate the lighting means (6) connected to the capacitor (C), and
control of a second switch (S2) coupled to the capacitor (C), in order to discharge the capacitor (C) when the operation of the lighting means (6) is ended,
**characterized in**
**that** the switching regulator (1) is a synchronous converter, wherein the second switch is the switch of the synchronous converter, which replaces the diode of a corresponding step-down or step-up converter, wherein
in order to charge the capacitor (C) and operate the lighting means (6) connected to the capacitor (C) during the operation of the lighting means (6), the first switch (S1) and the second switch (S2) are alternately switched on and off and
in order to discharge said capacitor when the operation of the lighting means (6) is ended, the first switch (S1) is switched off and the second switch (S2) is or remains switched on at least for a specific time.

9. The method according to Claim 8, wherein
a third switch (S3) is arranged between a ground connection (3) of the switching regulator (1) and the capacitor (C), and the method has the step:
Control of the third switch (S3) when the operation of the lighting means (6) is ended, in order to separate the lighting means (6) coupled to the ground-side connection of the capacitor (C) from the ground connection (3).

10. The method according to Claim 8, wherein
a third switch (S3) is arranged between a ground-side connection of the capacitor (C) and the lighting means (6), and the method has the step:
Control of the third switch (S3) when the operation of the lighting means (6) is ended, in order to separate the lighting means (6) from the ground connection (3).

11. The method according to Claim 8, wherein
the first switch (S1) is arranged between a ground-side connection of the capacitor (C) and the lighting means (6), and the method has the step:
Control of the first switch (S1) when the operation of the lighting means is ended, in order to separate the lighting means from the ground connection.

12. The method according to any one of Claims 8 to 11, wherein
the switching regulator (1) has a first output converter stage for operating a first lighting means (6) and a second output converter stage for operating a second lighting means (6), wherein each output converter stage has a coil (L), the capacitor (C), the first switch (S1) and the second switch (S2), and
when the operation of both lighting means (6) is ended the second switch (S2) of the first output converter stage and the second switch (S2) of the second output converter stage are controlled differently.

## Revendications

1. Régulateur de commutation destiné à faire fonctionner au moins un moyen d'éclairage (6), comportant
un circuit de commande (7) qui est conçu pour piloter une premier commutateur (S1), couplé à une bobine (L), du régulateur de commutation (1),
un condensateur (C), couplé à la bobine (L), auquel le moyen d'éclairage (6) est connecté ou peut être couplé, et
un deuxième commutateur (S2) couplé au condensateur (C) pour le déchargement du condensateur (C),
le circuit de commande (7) étant conçu pour, au moyen du pilotage du deuxième commutateur (S2), décharger le condensateur (C) au moins partiellement lors d'un achèvement du fonctionnement du moyen d'éclairage (6),
**caractérisé en ce que**
le régulateur de commutation (1) est un transformateur synchrone,
le deuxième commutateur (S2) étant le commutateur du transformateur synchrone remplaçant la diode d'un transformateur abaisseur ou élévateur correspondant.

2. Régulateur de commutation selon la revendication 1,
un troisième commutateur (S3) étant disposé entre une connexion de masse (3) du régulateur de commutation (1) et le condensateur (C), et
le circuit de commande (7) étant conçu pour, au moyen du pilotage du troisième commutateur (S3), séparer de la connexion de masse (3) le moyen d'éclairage (6) couplé à la connexion côté masse du condensateur (C) lors d'un achèvement du fonctionnement du moyen d'éclairage (6).

3. Régulateur de commutation selon la revendication 1,
un troisième commutateur (S3) étant disposé entre une connexion côté masse du condensateur (C) et le moyen d'éclairage (6) ou une connexion de sortie (5) à laquelle le moyen d'éclairage (6) peut être connecté, et
le circuit de commande (7) étant conçu pour, au moyen du pilotage du troisième commutateur (S3), séparer de la connexion de masse le moyen d'éclairage (6) lors d'un achèvement du fonctionnement du moyen d'éclairage (6).

4. Régulateur de commutation selon la revendication 1,
le premier commutateur (S1) étant disposé entre une connexion côté masse du condensateur (C) et le moyen d'éclairage (6) ou une connexion de sortie (5) à laquelle le moyen d'éclairage (6) peut être connecté, et
le circuit de commande (7) étant conçu pour, au moyen du pilotage du premier commutateur (S1), séparer de la connexion de masse le moyen d'éclairage (6) lors d'un achèvement du fonctionnement du moyen d'éclairage (6).

5. Régulateur de commutation selon l'une des revendications 1 à 4,
le régulateur de commutation (1) comportant un premier étage de convertisseur de sortie destiné à faire fonctionner un premier moyen d'éclairage (6), et un deuxième étage de convertisseur de sortie destiné à faire fonctionner un deuxième moyen d'éclairage (6), chaque étage de convertisseur de sortie comportant la bobine (L), le condensateur (C), le premier commutateur (S1) et le deuxième commutateur (S2).

6. Régulateur de commutation selon la revendication 5,
le circuit de commande (7) étant conçu pour piloter différemment le deuxième commutateur (S2) du premier étage de convertisseur de sortie et le deuxième commutateur (S2) du deuxième convertisseur de sortie.

7. Appareillage pour diodes lumineuses, comportant un régulateur de commutation (1) selon l'une des revendications 1 à 6.

8. Procédé de commande d'un régulateur de commutation pour le fonctionnement d'au moins un moyen d'éclairage (6), avec les étapes consistant à :
piloter un premier commutateur (S1), couplé à une bobine (L), du régulateur de commutation (1) afin de charger un condensateur (C) couplé à la bobine et pour faire fonctionner le moyen d'éclairage (6) connecté au condensateur (C), et
piloter un deuxième commutateur (S2) couplé au condensateur (C) afin de décharger le condensateur (C) lors d'un achèvement du fonctionnement du moyen d'éclairage (6), **caractérisé en ce que**
le régulateur de commutation (1) est un transformateur synchrone, le deuxième commutateur étant le commutateur du transformateur synchrone remplaçant la diode d'un transformateur abaisseur ou élévateur correspondant,
le premier commutateur (S1) et le deuxième commutateur (S2) étant mis en et hors circuit de façon alternée pour le chargement du condensateur (C) et pour le fonctionnement du moyen d'éclairage (6) connecté au condensateur (C) lors du fonctionnement du moyen d'éclairage (6), et
le premier commutateur (S1) étant mis hors circuit, et le deuxième commutateur (S2) étant mis en circuit ou demeurant en circuit au moins pendant un temps défini pour le déchargement lors de l'achèvement du fonctionnement du moyen d'éclairage (6).

9. Procédé selon la revendication 8,
un troisième commutateur (S3) étant disposé entre une connexion de masse (3) du régulateur de commutation (1) et le condensateur (C), et le procédé comportant l'étape consistant à
piloter le troisième commutateur (S3) lors de l'achèvement du fonctionnement du moyen d'éclairage (6) afin de séparer de la connexion de masse (3) le moyen d'éclairage (6) couplé à la connexion côté masse du condensateur (C).

10. Procédé selon la revendication 8,
un troisième commutateur (S3) étant disposé entre une connexion côté masse du condensateur (C) et le moyen d'éclairage (6), et le procédé comportant l'étape consistant à
piloter le troisième commutateur (S3) lors de l'achèvement du fonctionnement du moyen d'éclairage (6) afin de séparer de la connexion de masse (3) le moyen d'éclairage (6) .

11. Procédé selon la revendication 8,
le premier commutateur (S1) étant disposé entre une connexion côté masse du condensateur (C) et le moyen d'éclairage (6), et le procédé comportant l'étape consistant à :
piloter le premier commutateur (S1) lors de l'achèvement du fonctionnement du moyen d'éclairage afin de séparer de la connexion côté masse le moyen d'éclairage.

12. Procédé selon l'une des revendications 8 à 11,
le régulateur de commutation (1) comportant un premier étage de convertisseur de sortie pouf faire fonctionner un premier moyen d'éclairage (6), et un deuxième étage de convertisseur de sortie pour faire fonctionner un deuxième moyen d'éclairage (6), chaque étage de convertisseur de sortie comportant la bobine (L), le condensateur (C), le premier commutateur (S1) et le deuxième commutateur (S2), et,
lors de l'achèvement du fonctionnement des deux moyens d'éclairage (6), le deuxième commutateur (S2) du premier étage de convertisseur de sortie et le deuxième commutateur (S2) du deuxième étage de convertisseur de sortie étant pilotés différemment.
